# EUROPÄISCHE PATENTSCHRIFT

(11) **EP 1 174 474 B1**
(45) Veröffentlichungstag und Bekanntmachung des Hinweises auf die Patenterteilung: **26.04.2006**
(21) Anmeldenummer: 01116159.3
(22) Anmeldetag: 04.07.2001
(51) Int. Cl.: C09D 5/03, C09D 5/36, C09C 3/10

(54) **Verfahren zur Herstellung eines Pulverlacks, ein Pulverlack sowie die Verwendung von Effektpigmenten**
Method of preparing a powder paint, powder paint and use of effect pigments
Procédé de préparation de peinture pulvérulente, cette peinture et utilisation de pigments à effet

(30) Priorität: 19.07.2000 DE 10034972
(43) Veröffentlichungstag der Anmeldung: 23.01.2002
(73) Patentinhaber: Merck Patent GmbH, 64293 Darmstadt (DE)
(72) Erfinder: Witt, Tobias, 64331 Weiterstadt (DE)
(74) Vertreter: Leifert, Elmar

(56) Entgegenhaltungen:
- DE-A- 4 317 019
- NAGY T ET AL: "THE EFFECT OF COLORANTS ON THE PROPERTIES OF ROTOMOLDED POLYETHYLENE PARTS" POLYMER ENGINEERING & SCIENCE, SOCIETY OF PLASTICS ENGINEERS, US, Bd. 36, Nr. 7, 15. April 1996 (1996-04-15), Seiten 1010-1018, XP000594986 ISSN: 0032-3888

## Beschreibung

Die Erfindung betrifft ein Verfahren zur Herstellung eines Pulverlackes, bei dem Bindemittel und Pigmente sowie gegebenenfalls Füllstoffe, Additive und Vernetzer gegebenenfalls nach einer Vormischung in einem Extruder in der Schmelze zu einer homogenen Mischung verarbeitet werden und das Extrudat nach Erkalten zu dem fertigen Pulverlack vermahlen wird.

Pulverlacke haben als lösemittelfreie und umweltfreundliche Lacksysteme eine erhebliche Bedeutung erlangt und werden in vielen Einsatzgebieten gegenüber lösemittelhaltigen Lacken bevorzugt. Sie bestehen üblicherweise aus Bindemitteln, Pigmenten, Füllstoffen sowie gegebenenfalls Additiven und Vernetzern. Sie liegen in feinteiliger Form vor und werden in der Regel elektrostatisch auf eine Vielzahl unterschiedlicher Substrate aufgebracht und durch Einbrennen oder durch Strahlungsenergie gehärtet.

Beim Wirbelsinterverfahren wird in einem Fluidisierungsbecken ein Pulver durch Luft in Schwebe gehalten. Durch Eintauchen von erwärmten Substraten schmilzt das Polymerpulver auf dem Werkstück auf. Beim Einsatz der bisher bekannten Wirbelsinterpulver zur Herstellung von Effektbeschichtungen ergibt sich das Problem, daß es beim Fluidisierungsprozeß zu einer Entmischung von Effektpigmenten und Polymeren kommen kann.

Grundsätzlich können zur Pigmentierung von Pulverlacken alle bekannten Pigmente einschließlich der bekannten Effektpigmente verwendet werden, darunter auch Perlglanzpigmente auf Basis von Glimmer.

Perlglanzpigmente sind mit Metalloxiden beschichtete Glimmerplättchen, die in vielen technischen Gebieten Verwendung finden. Sie sind zum Beispiel von der Firma Merck erhältlich unter dem Handelsnamen Iriodin® . Diese Pigmente werden zum Beispiel in den deutschen Patenten und Patentanmeldungen 14 67 468, 19 59 998, 2009 566, 22 14 545, 22 15 191, 22 44 298, 23 13 331, 25 22 572, 31 37 808, 31 37 809, 31 51 343, 31 51 356, 31 51 355, 32 11 602, 32 35 017, 33 34 598 und 35 28 256 beschrieben.

Die Herstellung der Pulverlacke erfolgt im Allgemeinen durch Vermischen der vorgenannten Bestandteile und Homogenisieren der Mischung in Extrudern in der Schmelze. Der extrudierte stückige Pulverlack wird als festes Material einer Mühle zugeführt. Dort wird der Pulverlack auf die für die Anwendung notwendige Teilchengröße gemahlen.

Wenn plättchenförmige Effektpigmente zur Pigmentierung von Pulverlacken verwendet werden, treten allerdings besondere Probleme auf. Durch den bei der Herstellung des Pulverlacks angewandten Mahlprozeß wird ein großer Teil der Pigmentplättchen zerstört, was zu einer Minderung des Glanzeffektes führt. Es ist daher bisher nicht möglich, Effektpigmente wie andere Pigmente dem Ausgangsmaterial für die Herstellung des Pulverlackes zuzumischen und die Mischung dann nach Extrusion zu vermahlen.

Um die Zerstörung der Effektpigmentplättchen zu vermeiden, könnten diese dem Pulverlack nach dem Vermahlen zugemischt werden (dry-blend). Hierbei wird nachteilig eine An- oder Abreicherung von Pigmenten auf der Oberfläche des zu lackierenden Objektes beobachtet. Ursache hierfür ist das unterschiedliche Aufladeverhalten der Pulverlack- und Effektpigmentteilchen. Nur durch äußerst kostenaufwendige Verfahren, wie zum Beispiel das Bonding-Verfahren, bei dem nach dem Zumischen eine gleichförmige Adhäsion der Pigmente auf der Oberfläche der Pulverlackteilchen durch elektrostatische Kräfte erzielt wird, läßt sich das Problem der Entmischung zumindest teilweise lösen.

In der DE 24 34 855 wird ein Verfahren zur Herstellung von metalleffektpigmentierten Pulverlacken beschrieben, bei dem durch einen Bürstprozeß die Pigmentplättchen auf der Oberfläche der Pulverlackteilchen fixiert werden. Durch Einbringen von mechanischer und gegebenenfalls zusätzlich thermischer Energie wird die Verbindung von Pulverlack und Effektpigment erreicht.

Die hierzu erforderliche Anlage ist sehr aufwendig, was sich in den hohen Herstellungskosten für die glanzpigmentierten Pulverlacke niederschlägt. Daneben weisen die so erhaltenen Pulverlacke häufig einen unzureichenden Glanz auf.

Es ist Aufgabe der vorliegenden Erfindung, die beschriebenen Nachteile des Standes der Technik zu vermeiden und ein Verfahren zur Herstellung eines Pulverlackes anzugeben, mit dessen Hilfe Pulverlacke erhalten werden können, in denen die Effektpigmentpartikel Bestandteil der Pulverlackteilchen sind. Hierdurch soll die beschriebene An- oder Abreicherung von Pigmenten auf der Oberfläche des zu lackierenden Objektes vermieden werden und es sollen weiterhin Lackierungen mit ausgezeichnetem Glanz erzielt werden.

Überraschenderweise wurde gefunden, daß die beschriebene Zerstörung der Effektpigmentplättchen beim Mahlprozeß nicht auftritt, wenn oberflächenmodifizierte Effektpigmente eingesetzt werden, die mit einem niedermolekularen Polyethylen oder Polypropylen überzogen sind.

Oberflächenmodifizierte Perlglanzpigmente, die mit einer Polymerverbindung beschichtet sind, sind unter anderem aus der deutschen Offenlegungsschrift DE-A 43 17 019 bekannt. In dieser Patentanmeldung werden auch mit Polyethylenwachs beschichtete Perlglanzpigmente beschrieben. Obwohl in der genannten Patentanmeldung einleitend ausgeführt wird, daß oberflächenbelegte und modifizierte Pigmente sowohl zur Pigmentierung von Lacken, Pulverlacken, Farben, Druckfarben, Kunststoffen und dergleichen als auch in kosmetischen Zubereitungen Verwendung finden, wird in keiner Weise die Möglichkeit angesprochen, die beschichteten Pigmente einem Mahlprozeß zu unterwerfen. Der Fachmann muß vielmehr den Hinweis auf den Einsatz in Pulverlacken angesichts des damaligen Standes der Technik so verstehen, daß die Pigmente dem Pulverlack nachträglich zugesetzt werden müssen, wie es oben beschrieben wurde. Es war nämlich nicht zu erwarten, daß durch die dünne Beschichtung der Effektpigmentplättchen mit einem Polyethylenwachs oder Polypropylenwachs die mechanische Stabilität der Pigmente so stark verbessert würde, daß eine Beeinträchtigung des Glanzes trotz des Mahlprozesses nicht eintritt.

Gegenstand der vorliegenden Erfindung ist daher ein Verfahren zur Herstellung der vorbeschriebenen Pulverlacke, bei dem Bindemittel und Pigmente sowie gegebenenfalls Füllstoffe, Additive und Vernetzer gegebenenfalls nach einer Vormischung in einem Extruder in der Schmelze zu einer homogenen Mischung verarbeitet werden und das Extrudat nach Erkalten zu dem fertigen Pulverlack vermahlen wird, wobei der Pigmentanteil mindestens teilweise aus plättchenförmigen, oberflächenmodifiziertem Effektpigment besteht, das mit einem niedermolekularen Polyethylen oder Polypropylen mit einem Molekulargewicht von 1.000 bis 20.000 Dalton überzogen ist.

Vorteilhafte Ausgestaltungen des erfindungsgemäßen Verfahrens ergeben sich aus den Unteransprüchen 2-6.

Die Herstellung der erfindungsgemäßen Pulverlacke ist in der Praxis einfach und leicht zu handhaben. Sie entspricht der üblichen Herstellung von Pulverlacken. Die Bindemittelkomponente und die Pigmentkomponente, die aus beschichtetem Effektpigment und anderen Standardpigmenten bestehen kann, sowie gegebenenfalls Füllstoffe, Additive und Vernetzer werden intensiv gemischt, zum Beispiel mit Schaufel- oder Taurnelmischer. Die Einzelkomponenten können dabei gleichzeitig oder nacheinander der Bindemittelkomponente zugemischt werden. Die Mischung wird in einem Extruder in der Schmelze homogenisiert und nach dem Verlassen des Extruders gekühlt und grob gebrochen. In einer Mühle wird auf die endgültige Feinheit des Pulverlacks herunter gemahlen.

Der durch das erfindungsgemäße Verfahren erhaltene Pulverlack bietet gegenüber dem Stand der Technik erhebliche Vorteile: da keine Entmischung eintritt, wird die Applikationssicherheit erhöht Da kein Bonding-Prozeß oder ähnliche aufwendige Verfahren erforderlich sind, reduzieren sich die Herstellkosten. Es können auch tribostatisch applizierbare Pulverlacke hergestellt werden, was bisher nicht möglich war. Zusätzlich lassen sich auf die erfindungsgemäße Weise auch effektpigmenthaltige Pulverlackkonzentrate herstellen.

Gegenstand der vorliegenden Erfindung ist femer ein Pulvedack enthaltend Bindemittel. Pigmente sowie gegebenenfalls Füllstoffe, Additive und Vernetzer, bei dem der Pigmentanteil mindestens teilweise aus oberflächenmodifiziertem Effektpigment besteht, das mit einem niedermolekularen Polyethylen oder Polypropylen überzogen ist
Das Effektpigment ist vorteilhaft ein mit einem Metalloxid ein- oder mehrfach beschichtetes Glimmerpigment (Perlglanzpigment). Mit diesen Pigmenten werden die besten Ergebnisse hinsichtlich Glanz und Effekt erzielt. Als Effektpigmente können jedoch auch beschichtete Al₂O₃-Plättchen. Wismutoxidchlorid (BiOCl). Aluminium-plättchen. Variocrom®- oder Patiocrom®-Pigmente der BASF, LCP-Pigmente (*liquid crystal polymer*-Pigmente), beschichtete Glasplättchen oder Mehrschichtpigmente mit 3 bis 9 Schichten, vorzugsweise mit 3, 5 oder 7 Schichten, verwendet werden.

Weiterhin bevorzugt verwendete Effektglanzpigmente werden durch chemische oder physikalische Abscheidung in der Gasphase (CVD *chemical vapour deposition* bzw. PVD *physical vapour deposition*) oder aber durch Abscheidung in wässeriger Lösung hergestellt.

Der Anteil an Effektpigment beträgt 0,1 bis 50 Gew.-% bezogen auf die Summe aller Bestandteile. Bei niedrigeren Anteilen ist der Effekt nicht ausreichend ausgebildet und höhere Anteile führen ebenfalls zu einer Verschlechterung des Effektes. Vorzugsweise beträgt der Anteil an Effektpigment 0,5 bis 30 Gew.-%, besonders bevorzugt 0,5 bis 10 Gew.-% und ganz besonders bevorzugt 1 bis 7 Gew.-% bezogen auf das Gesamtgewicht des Pulverlacks.

Alle handelsüblichen Pulverlacke können für den erfindungsgemäßen Pulverlack verwendet werden, welche üblicherweise auf reaktiven Epoxiden, Polyestern, Polyacrylaten oder Polyurethanen, daneben auch auf anderen Polymeren basieren, die sowohl reaktiv als auch thermoplastisch sein können. Besonders bevorzugt sind Polyester-Pulverlacke, Polyacrylat-Pulverlacke, Polyurethan-Pulverlacke, Epoxid-Pulverlacke oder Polyester-Epoxid-Pulverlacke.

Das Effektpigment ist vorteilhaft mit 15 bis 50 Gew.-%, bevorzugt 15 bis 40 Gew.-%, besonders bevorzugt 15 bis 35 Gew.-% Polyethylen oder Polypropylen bezogen auf das Gesamtgewicht von Effektpigment und Polyethylen bzw. Polypropylen überzogen.

Das Effektpigment weist vorteilhaft eine Teilchengröße von 5 bis 200 µm auf, handelt es sich bei dem Effektpigment um ein Perlglanzpigment, so weist letzteres eine Teilchengröße von 5 bis 100 µm, bevorzugt 10 bis 60 µm auf.

Der erfindungsgemäße Pulverlack kann auf beliebige Substratmaterialien, beispielsweise Metalle wie Eisen, Stahl, Aluminium, Kupfer, Bronze, Messing sowie Metallfolien aber auch leitfähige modifizierte Oberflächen von Glas, Keramik und Beton u. ä., als auch auf nicht leitfähige Oberflächen wie Holz, z. B. Möbel, Glas, Keramik, Kunststoffe, anorganische Baustoffe oder andere Materialien zur dekorativen und/oder schützenden Zwecken aufgebracht werden.

Zur Verbesserung der Oberflächenqualität können auf die Pulverlackschicht auch noch ein oder mehrere Klarlackschichten aufgebracht werden, wodurch in der Regel noch eine Verbesserung sowohl des Aussehens als auch der Haltbarkeit der Gesamtlackierung erzielt wird. Der transparente Schlußlack ist jedoch nicht unbedingt erforderlich.

Die Erfindung betrifft auch die Verwendung von oberflächenmodifizierten, mit niedermolekularen Polyethylen oder Polypropylen mit einem Molekülgewicht von 1.000 bis 20.000 Dalton überzogenen, plättchenförmigen Effektpigmenten zur Herstellung von Pulverlacken, die aus einer extrudierten und vermahlenen Mischung von Bindemitteln und Pigment, sowie gegebenenfalls von Füllstoffen, Additiven und Vernetzern bestehen.

Im folgenden wird die Erfindung anhand eines Ausführungsbeispiels und eines Vergleichsbeispiels näher erläutert.

### Beispiel

Es werden 5 % von, mit niedermolekularem PE umhülltes, Iriodin® 163 zusammen mit allen anderen nötigen Rohstoffen in den Pulverlack-Produktionsprozesses geigeben, vorgemischt, extrudiert und vermahlen. Danach wird elektrostatisch auf übliche Weise appliziert.

### Vergleichsbeispiel

Es werden 5 % von Iriodin® 163 zusammen mit allen anderen nötigen Rohstoffen in den Pulverlack-Produktionsprozesses gegeben, vorgemischt, extrudiert und vermachten. Danach wird elektrostatisch auf übliche Weise appliziert.

Der visuelle Vergleich von dem im Beispiel lackierten Musterblech mit dem Vergleichsbeispiel zeigt, daß der Glanz und Glitzereffekt vom Beispiel gut bis sehr gut ist während das Muster vom Vergleichsbeispiel kaum noch Perlglanz- und Glitzereffekt zeigt.

## Patentansprüche

1. Verfahren zur Herstellung eines Pulverlacks, bei dem Bindemittel und Pigmente sowie gegebenenfalls Füllstoffe, Additive und Vernetzer gegebenenfalls nach einer Vormischung in einem Extruder in der Schmelze zu einer homogenen Mischung verarbeitet werden und das Extrudat nach Erkalten zu dem fertigen Pulverlack vermahlen wird, **dadurch** gekennzeichent, daß der Pigmentanteil mindestens teilweise aus plättchenförmigem, oberflächenmodifiziertem Effektpigment besteht, das mit einem Polyethylen oder Polypropylen mit einem Molekülgewicht von 1.000 bis 20.000 Dalton überzogen ist.

2. Verfahren nach Anspruch 1, **dadurch gekennzeichnet, daß** als Effektpigment mit Eisenoxid und/oder Titandioxid beschichtetes Glimmerpigment, beschichtete SiO₂-Plättchen, ein- oder mehrfach beschichtete Metalloxid-Plättchen, Wismutoxidchlorid-Plättchen, Aluminium-Plättchen, liquid crystal polymer-Pigmentplättchen (LCP-Pigmentplättchen), beschichtete Glasplättchen und/oder Mehrschichtpigmente verwendet werden.

3. Verfahren nach Anspruch 1 oder 2, **dadurch gekennzeichnet, daß** der Anteil an Effektpigment 0,1 bis 50 Gew.-% bezogen auf die Summe aller Bestandteile beträgt.

4. Verfahren nach Anspruch 1 bis 3, **dadurch gekennzeichnet, daß** das Bindemittel ein Polyester, Polyacrylat, Polyurethan, Epoxid oder Polyester-Epoxid ist.

5. Verfahren nach Anspruch 1 bis 4, **dadurch gekennzeichnet, daß** das Effektpigment mit 15 bis 50 Gew.-% Polyethylen oder Polypropylen bezogen auf das Gewicht des Effektpigments überzogen ist.

6. Verfahren nach Anspruch 1 bis 5, **dadurch gekennzeichnet, daß** das Effektpigment eine Teilchengröße von 5 bis 200 µm aufweist.

7. Pulverlack, erhättlich durch das Verfahren nach Anspruch 1, bestehend aus einer extrudierten und nach der Extrusion vermahlenen Mischung von Bindemitteln und Pigmenten sowie gegebenenfalls Füllstoffen, Additiven und Vernetzern, **dadurch gekennzeichnet, daß** der Pigmentanteil mindestens teilweise aus plättchenförmigem, oberflächenmodifiziertem Effektpigment besteht, das mit einem niedermolekularen Polyethylen oder Polypropylen mit einem Molekülgewicht von 1.000 bis 20.000 Dalton überzogen ist.

8. Verwendung von oberflächenmodifizierten, mit niedermolekularem Polyethylen oder Polypropylen mit einem Molekülgewicht von 1.000 bis 20.000 Dalton überzogenen, plättchenförmigen Effektpigmenten zur Herstellung von Pulverlacken durch das Verfahren nach. Anspruch 1, die aus einer extrudierten und vermahlenen Mischung von Bindemittel und Pigment sowie gegebenenfalls Füllstoffen, Additiven und Vernetzern bestehen.

## Claims

1. A process for producing a powder coating material, wherein binders and pigments and, optionally, fillers, additives and cross linkers, optionally following premixing, are processed as a melt in an extruder to give a homogeneous mixture, and the extrudate is ground, after cooling, to the finished powder coating material, **characterized in that** the pigment content consists, at least in part, of platelet-shaped, surface-modified effect pigment that has been coated with a polyethylene or polypropylene having a molecular mass of 1000 to 20,000 dalton.

2. The process according to claim 1, **characterized in that** the effect pigment is a mica pigment coated with iron oxide and/or titanium dioxide, coated SiO2 platelet, metal oxide platelet coated one or more times, bismuth oxychloride platelet, aluminium flake, liquid crystal polymer pigment platelet (LCP pigment platelet), coated glass flake and/or multilayer pigments.

3. The process according to either of claims 1 or 2, **characterized in that** the effect pigment content is from 0.1 to 50% by weight based on the total of all constituents.

4. The process according to any one of claims 1 to 3, **characterized in that** the binder is a polyester, polyacrylate, polyurethane, epoxide or polyester-epoxide.

5. The process according to any one of claims 1 to 4, **characterized in that** the effect pigment is coated with 15 to 50% by weight of polyethylene or polypropylene based on the weight of the effect pigment.

6. The process according to any one of claims 1 to 5, **characterized in that** the effect pigment has a particle size of 5 to 200 µm.

7. A powder coating material that can be produced by the process according to claim 1, said powder coating material consisting of an extruded mixture, which has been ground following extrusion, of binders and pigments and, optionally, of fillers, additives and cross linkers, **characterized in that** the pigment content consists, at least in part, of platelet-shaped, surface-modified effect pigment that has been coated with a low molecular mass polyethylene or polypropylene having a molecular mass of 1000 to 20,000 dalton.

8. Use of surface-modified, platelet-shaped effect pigments, that have been coated with a low molecular mass polyethylene or polypropylene having a molecular mass of 1000 to 20,000 dalton, for producing powder coating materials by the process according to claim 1, said powder coating materials consisting of an extruded and ground mixture of binders and pigment, and, optionally, of fillers, additives and cross linkers.

## Revendications

1. Procédé de préparation d'une laque pulvérulente, dans lequel on travaille dans une extrudeuse, dans la masse de fusion, jusqu'à un mélange homogène, des agents liants et des pigments, ainsi que d'éventuels agents de remplissage, additifs et agents réticulants éventuellement après mélange préalable, et où l'extrudat est moulu après refroidissement, sous forme de la laque pulvérulente finie, **caractérisé en ce que** la proportion de pigments est au moins en partie à base de pigment à effet, de surface modifiée, de forme plaquettaire, qui est enduit d'un polyéthylène ou d'un polypropylène ayant un poids moléculaire de 1000 à 20 000 dalton.

2. Procédé selon la revendication 1, **caractérisé en ce que** l'on utilise à titre de pigment à effet, un pigment brillant enduit d'oxyde de fer et/ou de dioxyde de titane, des plaquettes de SiO₂ enduites, une ou plusieurs plaquettes d'oxydes métalliques enduits, des plaquettes d'oxychlorure de bismuth, des plaquettes d'aluminium, des plaquettes de pigments polymères à cristaux liquides (plaquettes de pigments LCP), des plaquettes de verre enduites et/ou des pigments à couches multiples.

3. Procédé selon la revendication 1 ou 2, **caractérisé en ce que** la teneur de pigment à effet est de 0,1 à 50 % en poids par rapport à la somme de tous les composants.

4. Procédé selon les revendications 1 à 3, **caractérisé en ce que** l'agent liant est un polyester, un polyacrylate, un polyuréthane, un époxyde ou un polyester - époxyde.

5. Procédé selon les revendications 1 à 4, **caractérisé en ce** le pigment à effet est enduit de 15 à 50 % en poids de polyéthylène ou de polypropylène par rapport au poids total du pigment à effet.

6. Procédé selon les revendications 1 à 5, **caractérisé en ce** le pigment à effet présente une taille de particules de 5 à 200 µm.

7. Peinture pulvérulente, susceptible d'être obtenue par le procédé de la revendication 1, comprenant un mélange d'agents liants et de pigments extrudé et moulu après extrusion, ainsi que éventuellement, des agents de remplissage, des additifs et des agents réticulants, **caractérisée en ce que** la proportion de pigment est constituée au moins en partie de pigment à effet, de surface modifiée, de forme plaquettaire, qui est enduit d'un polyéthylène de bas poids moléculaire ou d'un polypropylène présentant un poids moléculaire de 1000 à 20 000 dalton

8. Utilisation de pigments à effet, de surface modifiée, de forme plaquettaire, enduits de polyéthylène de bas poids moléculaire ou de polypropylène présentant un poids moléculaire de 1000 à 20 000 dalton pour la fabrication de peintures pulvérulentes par le procédé selon la revendication 1, qui sont constituées d'un mélange extrudé et moulu d'agents liants et de pigment ainsi que éventuellement, d'agents de remplissage, d'additifs et d'agents réticulants.
